# EUROPÄISCHE PATENTANMELDUNG

(11) **EP 1 878 652 A2**
(43) Veröffentlichungstag der Anmeldung: **16.01.2008**
(21) Anmeldenummer: 07013692.4
(22) Anmeldetag: 12.07.2007
(51) Int. Cl.: B63B 35/44, B63B 21/50, B63B 1/04, B63B 1/10, F03D 1/00, E01D 15/14

(54) **Auftriebsgestützte Offshore-Gründung für Windenergieanlagen und andere Bauwerke**

(30) Priorität: 13.07.2006 DE 102006033215
(71) Anmelder: They, Jan, 22587 Hamburg (DE)
(72) Erfinder: They, Jan, 22587 Hamburg (DE)

(57) **Zusammenfassung**

Gegenstand der vorliegenden Erfindung ist eine Vorrichtung 1 zum Tragen von vorzugsweise hoch aufragenden Anlagen 2 wie Windkraftanlagen oder Brücken auf See, die durch Auftriebskräfte in einer aufrechten Position gehalten wird. Sie besteht aus einer Trageinheit 3 zum Tragen der Anlage 2 einer Referenzeinheit 5, die durch den Meeresgrund oder eine künstliche Einheit gebildet werden kann, sowie Verbindungseinrichtungen 4, welche die Bewegungsmöglichkeiten so einschränken, dass die Vorrichtung noch Ausweichbewegungen gegenüber den Wellenbewegungen ausführen kann.

Die erfindungsgegenständliche Konstruktion zeichnet sich dadurch aus, dass die Verbindungseinrichtungen 4 auch Druckbelastungen von der Trageinheit 3 auf die Referenzeinheit 5 übertragen können. Ferner werden Varianten vorgestellt, die Torsionsbelastungen übertragen oder die Seitwärtsbewegung durch die Wellen in günstiger Weise ausgleichen.

## Beschreibung

Gegenstand der vorliegenden Erfindung ist eine Vorrichtung zur stabilen Lagerung von Anlagen und/oder Bauwerken auf See. Sie besteht aus mindestens einer Trageinheit zum Tragen, mindestens einer, über dem Wasser befindlichen, hoch aufragenden Anlage oder eines hoch aufragenden Bauwerks, einer weiter unten befindlichen Referenzeinheit wie etwa dem Meeresgrund oder einem anderen, hinreichend stabilen Gebilde sowie Verbindungseinrichtungen, die zum Beschränken der Bewegungsmöglichkeiten der Trageinheit gegenüber der Referenzeinheit Trageinheit und Referenzeinheit miteinander verbinden. Die Verbindungseinrichtungen sind an Trageinheit und Referenzeinheit - vorzugsweise in alle Richtungen - schwenkbar angebracht. An Verbindungseinrichtungen und/oder Trageinheiten ist angreifendes Auftriebskörpervolumen vorgesehen, weiches mehr Auftrieb erzeugt, als zum Tragen der Anlage oder des Bauwerks erforderlich ist. Dadurch wird die Vorrichtung eine durch die Orientierung der Verbindungseinrichtungen vorgegebene aufrechte Position als Ruhelage einnehmen. Die Vorrichtung ist so ausgelegt, dass die wesentlichen Teile dieses Auftriebskörpervolumens in durch die Verbindungseinrichtungen zugelassenen möglichen Stellungen der Vorrichtung bei den zu erwartenden Wasserständen stets unter Wasser sind.

(Nach gegenwärtiger Sicht zeichnet sich die hier vorliegende Erfindung dadurch aus, dass mindestens eine Verbindungseinrichtung geeignet ist, Druck- und Zugbelastungen aufzunehmen, und/oder es sich bei der Referenzeinheit um etwas anderes als den Meeresgrund wie insbesondere eine künstliche Einheit handelt.)

Bei Windenergieanlagen entsteht durch die Reduktion des Impulses der Luftmassen ein hoher Winddruck. Die Ableitung dieses Impulses ist notwendige Voraussetzung für die Energiegewinnung. Zudem können auf See durch Wellenbewegung große Kräfte auf die Konstruktion wirken, deren Auftreten jedoch konstruktionsbedingt und kein notwendiger Nebeneffekt der Energieumwandlung ist.

Die gegenwärtig bekannten Trägervorrichtungen für Windenergieanlagen lassen sich grundsätzlich in zwei Gruppen einteilen. Die erste Gruppe wird durch Konstruktionen gebildet, die auf dem Meeresgrund stehen. Hierzu gibt es einen großen Variantenreichtum: Bei der Monopile-Konstruktion besteht die Gründung aus einem Rohr, das in den Boden getrieben wird. Dieses Rohr setzt sich im Mast fort. Bei der Schwergewichtsgründung wird ein schweres Fundament gegossen, aus dem der Mast herausragt. Andere Konstruktionen wie der Tripod verteilen die Kräfte über ein Gestell auf mehrere Anker, so dass die einzelnen Anker nicht die ganze Hebelwirkung des Mastes tragen müssen. All diesen Konstruktionen ist gemeinsam, dass sie von der Gründung bis zum Maschinenhaus wie ein Federstab wirken, der durch Winddruck und Wellenbewegung zu Schwingungen angeregt wird. Es können Resonanzen mit Winddruck und Wellenbewegung zu Schwingungen angeregt wird. Es können Resonanzen mit der Wellenbewegung ausgelöst werden. Eine ausführliche Darstellung solcher Konstruktionen findet sich bei beispielsweise bei Martin Kühn "Dynamics and Design Optimisation of Offshore Wind Energie Conversion Systems", DUWIND Delft University Wind Energy Research Institute, Report 2001.002. Ein besonderer Nachteil derartiger Konstruktionen ist die begrenzte Meerestiefe, für die sie geeignet sind.

Die zweite Gruppe bilden Konstruktionen, bei denen Auftriebskörper verwendet werden, welche die Anlagen tragen. Dabei setzen sich gegenwärtig solche Konstruktionen durch, die nicht durch Form oder Gewichtsstabilität stabilisiert werden, sondern am Meeresgrund durch Seile abgespannt sind. Bei diesen Konstruktionen wird im Gegensatz zu den meistens für Tensionieg-Plattformen verwendeten Halbtauchem völlig auf Formstabilität verzichtet. Statt dessen werden die Auftriebskörpervolumina vollständig und ständig unter Wasser gehalten, so dass das gesamte Auftriebskörpervolumen zum Auftrieb beiträgt und eine hohe Vorspannung der Seile erzeugt. Zudem liegt der Auftriebsschwerpunkt bei solchen Konstruktionen weit unter dem Gewichtsschwerpunkt. Beschreibungen derartiger Konstruktionen finden sich in DE 100 56 857 B4 oder WO 2004/061302 A2, in der eine Auftriebskörperkonstruktion beschrieben ist. Eine besondere Bedeutung kommt dabei solchen Konstruktionen zu, die in ihrer Bewegung nicht vollständig blockiert sind, sondern Pendelbewegungen in der Horizontalen ausführen können. Durch die Bemessung der Auftriebskraft kann die Eigenschwingung so eingestellt werden, dass eine übermäßige Anregung von Eigenschwingungen vermieden wird und die Schwingung auf die Größenordnung eines Meters beschränkt bleibt. Durch das Zulassen der Bewegungsmöglichkeit werden andererseits in den entsprechenden Richtungen kaum Kräfte übertragen. Um große Drehmomente kompensieren zu können, müssen entweder sehr hohe Vorspannungen gewählt werden oder die Angriffspunkte der Seite einen großen Abstand voneinander haben. Durch die Wahl eines großen Abstandes wird allerdings auch die Zugkaft auf die Anker herabgesetzt, so dass die Anker selbst kleiner ausfallen können. Die beschriebene Konstruktion weist allerdings auch bezüglich der Verankerung erhebliche Nachteile auf: Die meisten Anker können Zug- und Druckbelastungen aufnehmen. Die Konstruktion nutzt aber nur die Zugfestigkeit aus. Zudem ist es nicht möglich, eine Drehung der Anlage um die senkrechte Achse gezielt zu blockieren, ohne gleichzeitig andere Bewegungsmöglichkeiten ungünstig einzuschränken. Die Anlagen werden daher stets einer kritischen Glemeigung ausgesetzt sein, der eine Gegenkraft erst nach einer Drehung der Anlage entgegenwirkt. Es sind deshalb spezielle Windenergieanlagen erforderlich, bei denen die Rotornabe möglichst dicht an der senkrechten Drehachse gelegen ist. Die Konstruktionen können zwar bei größerer Meerestiefe eingesetzt werden als die der ersten Gruppe - die Kosten der Seile steigen jedoch mit der Meerestiefe weiter an, und die Rückstellkräfte werden bei gleichem Auftriebsüberschuss geringer.

Unter die zweite Gruppe fällt noch eine grundsätzlich andere Bauform: Hier dient eine ausgedehnte Halbtaucherkonstruktion als Träger, auf der bevorzugt mehrere Anlagen starr angebracht sind. Zur Erzeugung der Schwimmstabilität dienen senkrecht angeordnete zylindrische Körper, die in einigen Varianten als Träger der Anlagen dienen und in anderen separat ausgeführt sind. Der Halbtaucher wird durch Ankerketten und Ankerleinen so verankert, dass ein Schwojen möglich ist. Solche Konstruktionen ermöglichen eine Installation in großen Wassertiefen. Durch die große Ausdehnung des Halbtauchers können große Drehmomente kompensiert werden. Die Konstruktion eignet sich zudem für große Wassertiefen. Nachteilig ist allerdings, dass die Kräfte, welche auf die Anlagen wirken, voll auf die Unterkonstruktion übertragen werden. Die Konstruktion der Anlage selbst wird also genauso aufwendig wie die einer feststehenden Anlage bei mittlerer Wassertiefe. Der Halbtaucher wird zusätzlich benötigt.

Eine weitere Konstruktion ist für die Illustration und zur Unterscheidung des Wirkprinzips der vorliegenden Erfindung von Bedeutung: In US 2 837 753 ist ein Schwimmkörper für die Lagerung einer Anlage vorgesehen. Seine Lage wird über Stangen, die am Meeresboden mit Gelenken befestigt sind und über Gelenke, die am Schwimmkörper angreifen, kontrolliert. Die Vorrichtung ist jedoch so konstruiert, dass der Schwimmkörper nicht unter Wasser gezogen wird, sondern die Wellenbewegung des Systems mitmacht. Er taucht gerade so weit in das Wasser ein, dass die Gewichtskraft kompensiert wird. Dieser Schwimmkörper wird sich mit den Wellen auf- und abbewegen. Eine ruhige Lagerung einer Anlage ist mit einer solchen Konstruktion nicht möglich.

Eine weiter in die zweite Gruppe gehörende Bauform sieht vor, eine Schwimmstange an einem Gelenk auf dem Meeresboden zu befestigen. Diese dient mit ihrem, aus dem Wasser ragenden Teil als Träger für Bohrplattformen und ähnliche Anlagen. Bei solchen Konstruktionen ist das Hebelverhältnis entscheidend für die Wirtschaftlichkeit. Umso größer der Hebel der über dem Wasser angreifenden Kräfte im Vergleich zu dem Hebel des angreifenden Auftriebsmomentes wird, umso ungünstiger wird eine solche Konstruktion (Quelle z.B.: Peter Wagner: "Meerestechnik", Verlag Ernst & Sohn, Berlin 1990, Kapitel 6.3.2). Beispiel für eine ausgeführte Konstruktion ist dabei der Versuchsturm CONAT. In der Patentliteratur finden sich jedoch auch weitere Beispiele, so z.B. EP 0 236 722. Dort werden speziell Möglichkeiten vorgestellt, um die Bewegung des Turmfußes durch Verwendung von flexiblem Material zu ermöglichen.

### Folgende Dokumente sind noch zu erwähnen:

US 5 551 801 zeigt eine als Gittermast aufgebaute Plattform, die unter Wasser Absteltvorrichterngen für eine weitere Plattform besitzt. Weder der Gittermast noch die zusätzliche Plattform verfügen über beweglich schwenkbar angeordnete Verbindungen zum Untergrund, sondern sind starr mit diesem verbunden. Wenn die zweite Plattform auf der ersten aufsitzt, nutzt die Konstruktion auch keinerlei Eigenauftrieb.
US 4 365 576 befasst sich mit einem Unterwassertank, der im Zusammenhang mit verschiedenen Bohrplattformen dargestellt ist. Zum einen finden sich dort Tensionlag-Plattformen, zum anderen feste Konstruktionen. Einige dieser Konstruktionen sind an einer Grundplatte am Boden befestigt. Keine dienen jedoch als Träger für hoch aufragende Anlagen oder Bauwerke. Auch wird entweder kein Eigenauftrieb verwendet, oder die Verbindungselemente zum Boden nehmen keine Druckbelastung auf.
Aufgabe der vorliegenden Erfindung ist es, eine Vorrichtung zu schaffen, welche die stabile Lagerung von Anlagen auf See ermöglicht, die Nachteile der oben dargestellten Vorrichtungen nicht aufweist und die kompakt und kostengünstig herzustellen ist. Insbesondere soll eine Konstruktion geschaffen werden, die mit weniger Materialaufwand gleichzeitig eine gezielte und effektivere Stabilisierung der Anlage ermöglicht. Dabei sollen die notwendig auftretenden Kräfte des Winddruckes an den Untergrund abgeleitet werden. Kräfte durch angreifende Wellen sollen weitgehend vermieden werden.
Die Aufgabe der Erfindung wird durch eine Vorrichtung zur stabilen Lagerung von Anlagen und/oder Bauwerken auf See, bestehend aus mindestens einer Trageinheit zum Tragen, mindestens einer über dem Wasser befindlichen, hoch aufragenden Anlage oder eines hoch aufragenden Bauwerks, einer weiter unten befindlichen Referenzeinheit wie etwa dem Meeresgrund oder einem anderen, hinreichend stabilen Gebilde sowie Verbindungseinrichtungen, die zum Beschränken der Bewegungsmöglichkeiten der Trageinheit gegenüber der Referenzeinheit Trageinheit und Referenzeinheit miteinander verbinden, wobei die Verbindungseinrichtungen an Trageinheit und Referenzeinheit vorzugsweise in alle Richtungen schwenkbar angebracht sind und an Verbindungseinrichtungen und/oder Trageinheiten angreifendes Auftriebskörpervolumen vorgesehen ist, welches mehr Auftrieb erzeugt, als zum Tragen der Anlage oder des Bauwerks erforderlich ist, so dass die Vorrichtung eine durch die Orientierung der Verbindungseinrichtungen vorgegebene aufrechte Position als Ruhelage einnimmt und die wesentlichen Teile dieses Auftriebskörpervotumens in durch die Verbindungseinrichtungen zugelassenen möglichen Stellungen der Vorrichtung bei den zu erwartenden Wasserständen stets unter Wasser sind, wobei der Auftriebsschwerpunkt der Vorrichtung 1 weit unter dem Gewichtsschwerpunkt liegt, gelöst. Dabei ist mindestens ein sich zwischen den Verbindungseinrichtungen ergebender Hebelarm kürzer, als dies zur Aufrechterhaltung einer Vorspannung unter den zu erwartenden Belastungen erforderlich wäre, so dass mindestens eine Verbindungseinrichtung vorgesehen und geeignet ist, Druck- und Zugbelastungen aufzunehmen, und/oder es handelt sich bei der Referenzeinheit nicht um den Meeresgrund, sondern um eine künstliche Einheit, die zusammen mit der Vorrichtung 1 eine schwimmfähige, vorzugsweise als Halbtaucher ausgebildete Einheit bildet.

Durch eine solche Konstruktion kann eine Lagerung der Anlage oder des Bauwerks erreicht werden, die gegen die Bewegung in verschiedenen Richtungen blockiert ist, während in anderen Richtungen eine Ausweichbewegung möglich ist. In diesen Richtungen kann die Vorrichtung eine Pendelbewegung ausführen, wobei die rücktreibende Kraft durch den Auftriebsüberschuss gegeben ist. Durch die druckfeste Verbindung können zusätzlich angreifende Kräfte kompensiert werden, die bei ausschließlich zugfesten Verbindungseinrichtungen nicht an die Referenzeinheit abgeleitet werden könnten. Als Referenzeinheit kann der Meeresgrund verwendet werden. Alternativ kann jedoch z.B. eine weitere künstliche Struktur verwendet werden, die ihrerseits die Kräfte an den Meeresgrund weiterleitet. Eine solche Konstruktion ist z.B. bei großen Wassertiefen oder weichem Untergrund sinnvoll.

Eine kostengünstige Methode, Verbindungseinrichtungen herzustellen, ist die Verwendung von Zugelementen wie z.B. Seilen. Sie können z.B. durch den Auftriebsüberschuss vorgespannt werden, so dass sie eine stramme Verbindung abgeben.

Es können auch mehrere druckfeste Verbindungseinrichtungen verwendet werden. Mit drei Verbindungseinrichtungen lässt sich eine kippstabile Lagerung erreichen.

Durch torsionssteife Verbindungseinrichtungen kann das Gieren der Anlage verhindert werden, indem die Giermomente an den Untergrund abgeleitet werden. Werden drei Verbindungseinrichtungen, von denen eine torsionssteif ist, verwendet, so bleiben genau zwei Bewegungsfreiheitsgrade für die Trageinheit übrig, was genau den welleninduzierten Bewegungen entspricht.

Sind die Verbindungseinrichtungen in der Ruhelage der Vorrichtung parallel zur Senkrechten orientiert, kann die Vorrichtung eine Bewegung in der Horizontalen ausführen. So kann sie den welleniduzierten Kräften nachgeben, da diese vorwiegend in der Horizontalen wirken, wodurch die Belastung der Konstruktion im Vergleich zu festen Bauwerken erheblich reduziert wird.

Um eine Eigenschwingung der Vorrichtung einzustellen, die keine Anregung durch die Wellen fördert, ist ein Auftriebsüberschuss zwischen 25% und 45% vorteilhaft. So kann die Bewegung der Vorrichtung klein gehalten werden.

Die Vorrichtung eignet sich besonders für die Installation von Windkraftanlagen, da diese große Hebelkräfte an den Untergrund ableiten müssen, um die Impulsänderung der Luft zu kompensieren. Die Vorrichtung ermöglicht dies auf eine kostengünstige Weise, und ohne gleichzeitig großen Wellenkräften ausgesetzt zu sein.

Sind die Verbindungseinrichtungen aufeinander zugeneigt, so wird die Seitwärtsbewegung der Trageinheit auch zu einer Kippbewegung der Trageinheit führen, die der ursprünglichen Bewegung entgegenwirkt. Eine durch Wellen verursachte Seitwärtsbewegung führt so zu einer erheblich geringeren Bewegung der Anlage oder des Bauwerks.

Über zusätzliche Stützen, welche mit den Verbindungseinrichtungen verbunden sind, kann die Orientierung der Anlage in Abhängigkeit von der Orientierung der Verbindungseinrichtungen bestimmt werden. So kann z.B. ein besserer Ausgleich der Neigebewegung der Anlage erreicht werden.

Ist die Referenzeinheit eine weitere künstliche Struktur, können sich die auf die Verbindungseinrichtungen wirkenden Kräfte teilweise gegenseitig kompensieren, bevor sie an den Untergrund weitergegeben werden.

Bildet die Referenzeinheit zusammen mit der Vorrichtung eine schwimmfähige Struktur, so kann diese auch in großen Wassertiefen eingesetzt werden. Die Vorrichtung reduziert dabei die Belastung des Halbtauchers durch die Wellenbewegung. Die Referenzeinheit selbst befindet sich dabei weit unter der Oberfläche, so dass die Belastung der direkt angreifenden Wellen gering ist. Die Schwimmlage kann durch zusätzliche Schwimmkörper bestimmt werden, so dass das Auftriebskörpervolumen der Vorrichtung unter Wasser bleiben kann. Die zusätzlichen Schwimmkörper können beweglich an der Referenzeinheit angebracht werden, so dass auch sie nur verminderte Wellenkräfte auf die Referenzeinheit übertragen.

Eine Konstruktion mit feststehenden Schwimmkörpern ist jedoch auch möglich, wenn sich damit andere konstruktive Vorteile wie etwa Einfachheit verbinden.

Die Vorrichtung kann auch als Träger für eine Brücke eingesetzt werden. Insbesondere in tiefen Gewässern ergibt sich so eine kostengünstige und wellenresistente Gründung für die Brücke. Fjorde können so überbrückt werden.

Hängebrücken sind kostengünstige Konstruktionen. Sie sind zumeist an Pfeilern abgespannt. Wird ein solcher Pfeiler mittels der erfindungsgemäßen Vorrichtung hergestellt, so erhält man auch eine kostengünstige Gründung für die Brücke. Ein konstruktiver Vorteil besteht darin, dass sich die Brücke an den Enden des Fahrweges abstützt und ausrichtet. Die Seile kompensieren nur die Gewichtskraft. So kann auch eine leichte Bewegung des Mastes in Kauf genommen werden.

Aus statischen Gründen ist es zweckmäßig, den Teil des Auftriebskörpervolumens, welcher den Auftriebsüberschuss erzeugt, in der Nähe der Angriffspunkte der Verbindungseinrichtungen anzubringen. So werden die Kräfte direkt über die Verbindungseinrichtungen abgeleitet und erfordern so keine zusätzliche Festigkeit an der Trageinheit.

In einer bevorzugten Variante weist die erfindungsgemäße Vorrichtung eine torsionsfeste Verbindungseinrichtung auf, die in der Ruhelage der Vorrichtung senkrecht steht. Weitere Verbindungseinrichtungen, welche die Orientierung der Vorrichtung bestimmen, sind in der Ruhelage geneigt. Durch diese Konstruktion wird ein einfacher Aufbau erreicht, weil nur eine Verbindungseinrichtung Zugkräfte aufnimmt. Sie kann als Stahlrohr ausgeführt werden, das zum Auftrieb der Vorrichtung beiträgt. So wird eine aufrechte Ruhelage vorgegeben.

Stahlrohre und Rohre aus Ferrozement stellen stabile, torsionsfeste Hohlkörper dar, die ein günstiges Verhältnis von Oberflächen zu Volumen haben. Sie sind deshalb besonders geeignet.

Um eine schwenkbare Verbindung zwischen den Verbindungseinrichtungen zu erreichen, sind Kugel- und Kardangelenke neben anderen Gelenktypen besonders geeignet.

Um Verbindungen zum Meeresgrund herzustellen, kommen verschiedene Verankerungsmethoden in Betracht, die eine zuverlässige Verbindung zum Untergrund herstellen - so Pfahlanker, Rammpfahlanker, Sauganker, Gewichtsanker, die in Senkkastenbauweise ausgeführt sein können, oder andere bekannte Ankertypen.

Eine kompakte Konstruktion erhält man, wenn die Trageinheit tetraedrisch aufgebaut ist und mit einer Spitze nach oben zeigt. Die Grundfläche bildet dann ein Dreieck, an dessen Enden die Verbindungseinrichtungen angreifen können. Man erhält mit einem minimalen Aufwand diese drei Angriffspunkte. Die Kanten des Tetraeders können von Streben und Stützen gebildet werden.

Die Schwenkbarkeit der Verbindungseinrichtungen kann anstatt durch Gelenke durch elastische Abschnitte der Vorrichtung hergestellt werden, da sich die Vorrichtung nur um wenige Grade bewegt. Dazu können diese Abschnitte z.B. aus Trägem mit geeignetem Profil bestehen. Man erhält so eine besonders einfache Konstruktion. Einige Möglichkeiten, solche elastischen Abschnitte herzustellen, finden sich z.B. in EP 0 236 722.

Im Folgenden wird die Erfindung anhand von Ausführungsbeispielen näher erläutert. Wo es der Verständlichkeit dient, werden Bezugszeichen verwendet, die sich auf die Zeichnung beziehen.

Es zeigt
Fig. 1 eine schematische Darstellung einer erfindungsgemäßen Vorrichtung.
Fig. 2 eine schematische Darstellung der erfindungsgemäßen Vorrichtung mit vorteilhaft angeordneten Verbindungseinrichtungen,
Fig. 3 eine Variante der Vorrichtung mit unterschiedlich ausgeführten Verbindungseinrichtungen,
Fig. 4 eine Variante der erfindungsgemäßen Vorrichtung, bei der neben druckfesten Verbindungen auch ausschließlich zugfeste Verbindungen besonders vorteilhaft angeordnet sind,
Fig. 5 eine Bauform der erfindungsgemäßen Vorrichtung mit einer besonders vorteilhaft aufgebauten Tragstruktur,
Fig. 6 eine Variante der erfindungsgemäßen Vorrichtung, bei der sowohl Seitwärtsbewegung als auch Neigebewegung ausgeglichen werden,
Fig. 7 eine Variante der Vorrichtung, bei der die Referenzeinheit als Halbtaucher ausgeführt ist,
Fig. 8 die Draufsicht auf eine als Halbtaucher ausgeführte Referenzeinheit,
Fig. 9 eine Brückenkonstruktion unter Verwendung einer erfindungsgemäßen Vorrichtung.

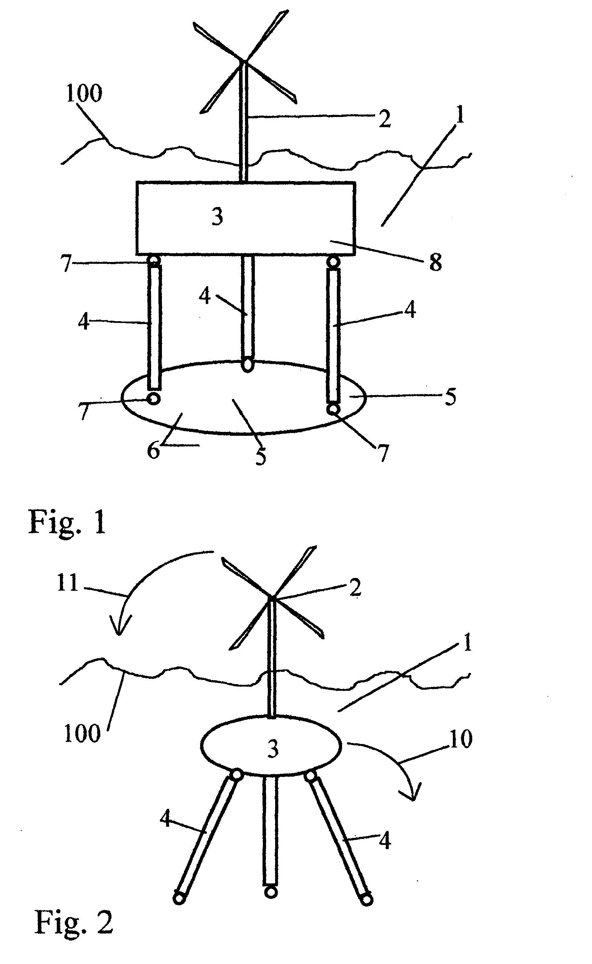

Fig. 1 ist schematische Darstellung einer erfindungsgemäßen Vorrichtung 1. Die Anlage 2, hier als Windkraftanlage dargestellt, befindet sich auf der Trageinheit 3, welche über Verbindungseinrichtungen 4 mit einer darunter gelegenen Referenzeinheit 5 verbunden ist. Bei der Referenzeinheit 5 kann es sich um den Meeresgrund 6 oder ein anderes hinreichend stabiles Gebilde handeln. Auf geeignete Ausbildungsformen einer solchen Referenzeinheit wird weiter unten eingegangen. Die Verbindungseinrichtungen 4 sind über Gelenke 7 an Trageinheit 3 und Referenzeinheit 5 schwenkbar angebracht. So werden durch die jeweiligen Verbindungseinrichtungen 4 jeweils Bewegungen blockiert, welche in die Richtung laufen, in welche die Verbindungseinrichtungen 4 orientiert sind. Je nach Zahl und Orientierung der Verbindungseinrichtungen 4 bleiben Bewegungen in den übrigen Richtungen frei. Ist an der Trageinheit 3 oder den Verbindungseinrichtungen 4 Auftriebskörpewotumen 8 vorgesehen, das mehr Auftrieb erzeugt, als zur Kompensation der Gewichtskraft von Anlage 2 und Vorrichtung 1 erforderlich ist, so wird die Vorrichtung 1 stets eine Position einnehmen, in der das Auftriebskörpervolumen 8 möglichst weit oben ist. Verlaufen z.B. die Verbindungseinrichtungen 4 alle parallel und befindet sich Auftriebskörpervolumen 8 an der Trageinheit 3 oder ist Auftiebskörpervolumen 8 an den Verbindungseinheiten konzentrisch angeordnet, so wird die Vorrichtung eine aufrechte Ruheposition einnehmen, bei der die Trageinheit die höchste, durch die Verbindungseinrichtungen zugelassene Position einnimmt. Voraussetzung dafür ist, dass die Auftriebskötpervolumina so angeordnet sind, dass sie nicht oder nur zu unwesentlichen Teilen auftauchen. Wird nun die Anlage durch extern wirkende Kräfte gestört, so kann sie eine Pendelbewegung um diese Ruheposition herum ausführen. Die Größe der rücktreibenden Kraft wird von dem überschüssigen Auftrieb bestimmt. Die Trägheit hängt mit der Masse der Anlage, der Vorrichtung 1 und mit der Masse des verdrängten Wassers, über einen Faktor, welcher die Form des Auftriebskörpers berücksichtigt, zusammen. Dieser Formfaktor hat z.B. für zylindrische Körper einen Betrag von 2. Außerdem dämpft das Wasser durch Wirbelbildung die Bewegung der Vorrichtung. Die große Trägheit der Auftriebskörpervolumina im Wasser wirkt ähnlich wie die Masse von Schwergewichtsfundamenten.

Dadurch dass die Verbindungseinrichtungen 4 Zug- und Druckbelastungen aufnehmen können, können horizontale Drehmomente direkt an die Referenzeinheit 5 weitergegeben werden, ohne dass dazu eine Vorspannung der Verbindungseinrichtungen 4 notwendig wäre: Verursacht der Winddruck eine Kraft an der Anlage 2 und damit verbunden ein horizontales Drehmoment, so wird auf die Verbindungseinrichtung 4, die auf der Luv-Seite angeordnet ist, eine Zugkraft ausgeübt, auf die Verbindungseinrichtung 4 auf der Lee-Seite eine Druckkraft. Sofern die Verbindungseinrichtungen auch Druckkräfte weitergeben können, muss durch das Auftriebskörpervolumen keine Vorspannung erzeugt werden.

Wäre dies erforderlich, so müsste durch große Abstände der Angriffspunkte für große Hebelarme der angreifenden Kräfte gesorgt werden, um die erforderlichen Kräfte und damit die Vorspannung zu begrenzen. Da diese Notwendigkeit entfällt, kann zu einer kompakteren Konstruktion übergegangen werden.

Ein weiterer Vorteil der druckfesten Verbindungseinrichtungen 4 besteht darin, dass die Druckkräfte auch auf die Referenzeinheit übertragen werden. Die meisten Verankerungssysteme wie Gewichtsanker, Rammpfahlanker oder Sauganker können stets Druck- und Zugbelastungen aufnehmen. Werden also bei gleicher Ankerstärke auch Druckkräfte auf den Meeresgrund übertragen, können geringere Abstände zwischen den Verankerungen gewählt werden als ohne Übertragung der Druckkräfte.

In einer zweckmäßigen Variante der Vorrichtung können über die Verbindungseinrichtungen auch Drehmomente übertragen werden. So lässt sich eine Rotation der Anlage 2 - beispielsweise Gieren - um eine horizontale Achse verhindern. Dazu können die Gelenke 7, welche die Verbindungseinrichtungen mit der Referenzeinheit 5 und der Trageinheit verbinden, beispielsweise als Kardangelenke ausgeführt werden. Wird als Referenzeinheit der Meeresgrund verwendet, so können die Drehmomente über die Anker auf den Meeresgrund übertragen werden. Durch einen Anker, der ein solches Drehmoment aufnimmt, kann so das Drehmoment kompensiert werden.

Alternativ kann als Referenzeinheit eine starre Konstruktion verwendet werden, an der die Verbindungseinrichtungen 4 angreifen. Diese Referenzeinheit wiederum kann an dem Untergrund befestigt oder auf eine andere Art und Weise stabilisiert werden. Der Vorteil einer solchen Konstruktion besteht darin, dass das Drehmoment so nicht in einem Punkt durch spezielle Anker in den Untergrund abgeleitet werden muss, sondern auf mehrere Punkte verteilt werden kann, so dass sich große Hebelarme ergeben.

Generell ist darauf zu achten, dass nicht alle Gelenke 8 an der Verbindungseinrichtung und nicht alle Gelenke 8 an der Referenzeinheit auf einer Achse liegen, es sei denn, es ist erwünscht, dass die Vorrichtung 2 eine Bewegung um diese Achse ausführt. (in den Zeichnungen liegen die Gelenke teilweise aus perspektivischen Gründen auf einer Linie.) In Fig. 2 ist eine Variante der Vorrichtung 1 dargestellt, welche die Seitwärtsbewegung der Trageinheit teilweise ausgleicht: Zu diesem Zweck sind die Verbindungseinrichtungen 4 so angebracht, dass sie sich einer Mittelachse 9 der Vorrichtung 1 zuneigen (die mittlere Verbindungseinrichtung ist nur aus perspektivischen Gründen gerade dargestellt). Verursacht z.B. die Wellenbewegung eine Bewegung in Richtung z.B. des Richtungspfeils 10, so wird sich die Verbindungseinrichtung 4, die im Bild rechts dargestellt ist, aufrichten und die Verbindungseinrichtung 4, die links im Bild dargestellt ist, wird sich weiter absenken. Entsprechend führt die Trageinheit 3 mit der Anlage 2 eine Neigebewegung in die entgegengesetzte Richtung aus, entsprechend dem Richtungspfeil 11. Durch geeignete Wahl der Neigung der Trageinheiten 4 kann erreicht werden, dass der obere Teil der Anlage eine geringere Seitwärtsbewegung ausführt als die Trageinheit 3.

Da die Seitwärtsbewegung durch geeignete Einstellung der Eigenschwingung im Verhältnis zur Wellenbewegung auf die Größenordnung von Metern begrenzt werden kann und andererseits z.B. Windenergieanlagen eine Höhe in der Größenordnung von 100 m haben, ist der erforderliche Neigungswinkel vernachlässigbar klein. Er ist vor allem kleiner als der Neigungswinkel, der mit der Biegung des Mastes durch den Winddruck einer Windenergieanlage verbunden ist. Es kann zweckmäßig sein, die Neigung so einzustellen, dass die Seitwärtsbewegung der Trageinheit nicht vollständig kompensiert wird. So kann nämlich der Winddruck eine Seitwärtsbewegung der Trageinheit 3 auslösen, was er bei einer vollständigen Kompensation der Bewegung nicht könnte. Die ausgelöste Neigebewegung der Trageinheit 3 könnte die durch die Biegung des Mastes 12 der Anlage 2 verursachte Neigung so kompensieren.

Umso stärker die Seitwärtsbewegung der Anlage durch den Winddruck kompensiert wird, desto größer ist das an die Referenzeinheit 5 abzuleitende Drehmoment. Die Wahl einer geeigneten Neigung und eines geeigneten Abstandes der Verbindungseinrichtungen 4 bietet dem Fachmann viele Möglichkeiten, die Eigenschaften auf das zur Verfügung stehende Material abzustimmen, indem er die Größen variiert und die auftretenden Kräfte entsprechend einstellt.

Bezüglich der Berechnung der Neigung der Verbindungseinrichtungen 4 sollte noch erwähnt werden, dass hier eine Betrachtung erster Ordnung gute Ergebnisse liefert.

Beispielhaft wird hier zunächst die Bewegung in einer Ebene beschrieben. Betrachtet werden zwei Verbindungseinrichtungen 4 mit Längen l1 und l2 an der erfindungsgemäßen Konstruktion, die in der Ruhelage um die Winkel A1 und A2 zur Senkrechten geneigt sind. Wird die Trageinheit zur Seite bewegt, so dass sich eine zusätzliche Neigung der Verbindungseinrichtungen um einen Winkel W ergibt, ergibt sich die Höhe der Angriffspunkte der Verbindungseinrichtungen wie folgt: h1 = 11 cos (W + A1) und h2 = l2 cos (W + A2). Für kleine Winkel kann dieser Zusammenhang durch Taylor-Entwicktung erster Ordnung wiedergegeben werden: h1 = l1 cos (A1) - l1 sin (A1) * W und h2 = l2 cos (A2) - 12 sin (A2) * W. Falls A1 = - A2 und l1 = l2 = l ist h1 - h2 = (I sin (A1) - I sin (A2)) * W. Der Neigungswinkel B der Trageinheit hängt mit der Höhendifferenz h1 - h2 wie folgt zusammen: h1 - h2 = t sin (B), wobei t der Abstand der Angriffspunkte der Verbindungseinrichtungen an der Trageinheit ist. Durch die Vereinfachung sin (B) = B für kleine Winkel kommt man auf folgende Beziehung: W I (sin (A1) - sin (A2)) / t = B. Der zweidimensionale Fall lässt sich auf den Dreidimensionalen verallgemeinern, indem man die dreidimensionale Konstruktion jeweils in die Ebene des Neigungswinkels W projiziert. Man erkennt, dass das Verhältnis I sin (A) / t dabei stets erhalten bleibt. Insbesondere erkennt man auch, dass man weitere Stützen anordnen kann, wenn sie den gleichen Abstand und die gleiche Neigung zur Mittelachse haben, da auch hier das entsprechende Verhältnis erhalten bleibt. Bei genauerer Betrachtung würde sich zeigen, dass im dreidimensionalen Fall an die Bewegung um den Winkel W noch eine weitere aus der Ebene heraus gekoppelt ist, die jedoch tolerierbar klein ist. Bei Verwendung von mehr als drei Stützen wird die Bewegung zudem auf weniger Freiheitsgrade beschränkt. Werden die Schwingungseigenschatten der Vorrichtung jedoch richtig abgestimmt, so lässt sich die Bewegung soweit reduzieren, dass oben die gemachten Näherungen die Verhältnisse gut wiedergeben. Bei der Verwendung von mehr als drei Stützen lassen sich die Abweichungen durch zusätzliche Elastizität der Struktur dann ausgleichen, so dass keine zusätzlichen Freiheitsgrade blockiert werden.

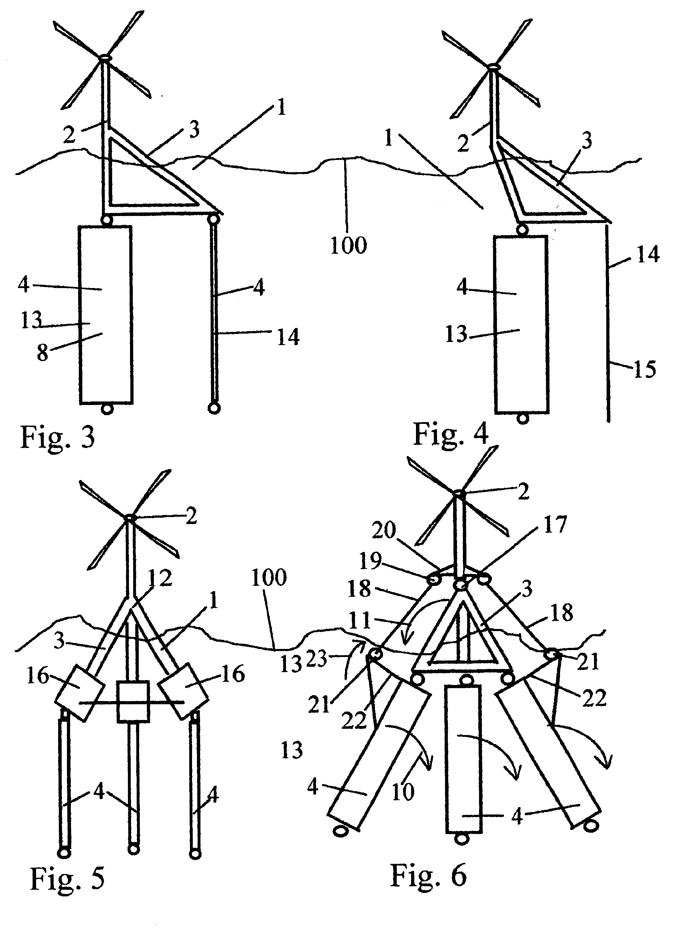

Wie Fig. 3 zeigt, müssen die Verbindungseinrichtungen 4 nicht gleich und nicht symmetrisch aufgebaut sein. Die hier dargestellte Variante weist eine große, zylindrische Verbindungseinrichtung 13 auf, an der ein großer Teil des Auftriebskörpervolumens 8 angreift. Die Anlage befindet sich direkt über dieser Verbindungseinrichtung 13, so dass ihr Gewicht direkt in diese Verbindungseinrichtung 13 eingeleitet wird. Die Gewichtskraft wirkt so sehr direkt auf das Auftriebskörpervotumen 8, an der Verbindungseinrichtung 13. Ist Verbindungseinrichtung 13 als breiter, zylindrischer Hohlkörper ausgestattet, so eignet sie sich auch besonders gut zur Übertragung von Torsionskräften an die Referenzeinheit. Die weiteren Verbindungseinrichtungen 14 (hier ist nur eine zu sehen, da die andere verdeckt ist) dienen jetzt nur noch zur Kompensation der horizontalen Drehmomente.

Es ist auch möglich, teilweise Verbindungseinrichtungen einzusetzen, die nur Zugbelastung aufnehmen müssen. Beispielhaft ist in Fig. 4 eine besonders günstige Konstruktion dargestellt. Ebenso wie in Fig. 3 weist sie eine Verbindungseinrichtung 13 mit einem großen Auftriebskörpervotumen auf. Die Anlage 2 ist etwas versetzt gegenüber dieser Verbindungseinrichtung 13 angeordnet. Auf entgegengesetzten Seiten befinden sich Verbindungseinrichtungen 15 (hier nur 1 dargestellt), die nur Zugbelastungen aufnehmen. Durch die Hebelwirkung, welche durch das Gewicht der Anlage 2 verursacht wird, werden diese Verbindungseinrichtungen vorgespannt. Zweckmäßig ist, die Vorspannung so zu wählen, dass sie dem Auftriebsüberschuss der Vorrichtung 1 entspricht. Die Befestigung der Verbindungseinrichtung 13 wird dann genauso stark auf Druck wie auf Zug belastet. So erhält man eine optimale Ausnutzung der Druckfestigkeit der Verankerung. Der Einsatz von Verbindungseinrichtungen 15, die nur Zugbelastung aufnehmen, ist immer dann möglich, solange sie stramm gespannt sind. Dies kann durch Auftriebsüberschuss erreicht werden. Alternativ kann die für die Spannung erforderliche Kraft aber auch durch eine oder mehrere andere druckfeste Verbindungseinrichtungen kompensiert werden, wie das in diesem Beispiel im Zusammenspiel mit der Gewichtsverteilung geschieht.

Auch bei den Konstruktionen, die, wie in Fig. 3 und Fig. 4 dargestellt, unterschiedlich aufgebaute Verbindungseinrichtungen aufweisen, kann durch Schrägstellung von Verbindungseinrichtungen eine Kompensation der Seitwärtsbewegung erreicht werden. Es ist dann zweckmäßig, solche Verbindungseinrichtungen schräg zu stellen, die keinen wesentlichen Teil des Auftriebskörpervolumens 8 aufweisen, da sich sonst eine Ruhelage einstellt, in weicher die Trageinheit schräg steht. Alternativ können aber das Auftriebskörpervolumen und die Angriffspunkte der Verbindungseinrichtung 4 an der Trageinheit 3 so gewählt werden, dass sich eine andere geeignete Orientierung der Trageinheit 3 ergibt, in der die Anlage 2 aufrecht angebracht werden kann.

In Fig. 5 ist eine Variante der Vorrichtung 1 dargestellt, die eine besonders günstige Ausführungsform der Trageinheit 3 aufweist. Sie ist als tetraedrische Struktur ausgeführt. Eine Ecke des Tetraeders zeigt nach oben. Auf dieser Ecke ist die Anlage 2, hier als Windenergieanlage dargestellt, mit dem unteren Ende ihres Mastes angebracht. In den übrigen Enden sind Auftriebskörper 16 vorgesehen. Die Kanten des Tetraeders, welche das untere Ende des Mastes mit den zylindrischen Auftriebskörpervolumina verbinden, sind vorzugsweise als Stahlrohre ausgeführt. Sie können Druckbelastungen aufnehmen und so das Gewicht der Anlage auf den Auftriebskörpervolumina abstützen. Die Verbindungen entlang der Kanten des Tetraeders, zwischen den Auftriebskörpern brauchen nur Zugbelastungen aufzunehmen. Verbindungseinrichtungen 4 greifen direkt an den Auftriebskörpervolumina, an den Kanten an, so dass eine direkte Übertragung der durch das überschüssige Auftriebskörpervolumen verursachten Kräfte stattfindet. Dadurch belasten diese Kräfte nicht die Trageinheit 3. Als Variante können die Verbindungseinrichtungen 4 auch mit Auftriebskörpervolumen ausgestattet werden. Je nach Größe kann bei einer solchen Konstruktion auch auf die Auftriebskörper an den Ecken des Tetraeders verzichtet werden.

Diese Konstruktion ermöglicht einen einfachen Vergleich mit einem anderen Stand der Technik: Wie eingangs dargestellt, sind bereits Konstruktionen bekannt, mit denen Anlagen auf See auf abgespannten Auftriebskörpern installiert werden. Diese weisen eine Trageinheit auf, die prinzipiell genauso aufgebaut ist wie die in Fig. 3 dargestellte, mit dem Unterschied, dass die Verbindungseinrichtungen nur für Zugbelastungen ausgelegt sind. Dieses kann durch eine große Kantenlänge des Tetraeders gewährleistet werden. Gegenwärtig werden Konstruktionen favorisiert, die Windkraftanlagen mit einer Leistung von 3 MW aufnehmen können. Solche Konstruktionen haben einen Auftrieb von ca. 12 GN und ein Gewicht von ca. 700 t, so dass ca 40% der Auftriebskraft für die Vorspannung sowie das Aufrechthalten der Vorrichtung zur Verfügung stehen. Die Eckpunkte des Tetraeders mit den Auftriebskörpern sind jeweils 35 m von der senkrechten Mittelachse der Konstruktion entfernt. Die Wassertiefe beträgt ebenfalls 35 m; die Länge der vorgespannten Seile, die hier als Verbindungseinrichtungen dienen, beträgt 20 m. Eine derartige Konstruktion weist eine Eigenschwingungsperiode von ca. drei Sekunden auf. Da die Wellenperiode von Extremwellen z.B. in der Ostsee zwischen sieben Sekunden und dreizehn Sekunden liegt, treten hier keine Resonanzen auf, und die Schwingungsanregung bleibt klein. Giermomente führen zu einer Drehung der Konstruktion, die wiederum durch Schrägstellung der Verbindungseinrichtungen und damit verbundenem Eintauchen der Auftriebskörper eine Gegenkraft hervorruft. Dabei ist ein Eindrehen von ein bis zwei Grad erforderlich. Um das Eindrehen zu begrenzen, ist es erforderlich, große Abstände zwischen den Angriffspunkten der Verbindungseinrichtungen vorzusehen. Zudem ist das Rückstellmoment direkt von der Vorspannung abhängig.

Durch eine torsionsfeste Verbindungseinrichtung können diese Erfordernisse beseitigt werden, so dass eine schmalere Konstruktion möglich wird. Gleichzeitig kann die Gierstabilität verbessert werden. Der Auftriebsüberschuss wird dann nur noch benötigt, um die Schwingungseigenschaften der Vorrichtung günstig einzustellen und die Vorrichtung aufzurichten.

Bei gleicher Ankerbelastbarkeit können die Abstände zwischen den Verbindungseinrichtungen halbiert werden, Weil auch die Druckfestigkeit der Anker ausgenutzt wird. Durch die kompaktere Konstruktion kann das Gewicht und damit auch der erforderliche Auftrieb der Anlage herabgesetzt werden. Werden Teile der Auftriebskörpervolumina zudem noch an den Verbindungseinrichtungen angebracht, reduziert sich darüber hinaus die Ankopplung der Wellenbewegung, da diese Auftriebskörpervolumina dann tiefer liegen und so weniger von der Wellenbewegung betroffen sind. Durch Anpassung der Abstände der in das Wasser tauchenden Teile auf die halbe Wellenlänge des zu erwartenden Weitenspektrums lässt sich zudem eine Reduzierung der Wellenbewegung erreichen. Ein anderer Abstand der in das Wasser tauchenden Teile hingegen reduziert die Kräfte zwischen diesen Teilen. Durch die höhere Flexibilität des Konstrukteurs, die er beim Aufbau der erfindungsgemäßen Konstruktion bietet, ist es daher leichter, eine vorteilhafte Abstimmung der Vorrichtung 1 zu erreichen.

In Fig. 6 ist eine weitere Variante der erfindungsgemäßen Vorrichtung 1 gezeigt, welche nicht nur die Seitwärtsbewegung, wie in Fig. 2 dargestellt, der Trageinheit 3 ausgleicht, sondern auch die dabei entstehende Neigebewegung. Kippen die Verbindungseinrichtungen 4 in Richtung der Pfeile 10, so wird die Trageinheit 3 eine Kippbewegung in Richtung des Richtungspfeils 11 ausführen, genauso wie dieses auch bei der in Fig. 2 dargestellten Konstruktion der Fall ist. Hier ist die Anlage jedoch nur über ein Gelenk 17 mit der Trageinheit verbunden. Die Orientierung der Anlage wird über zusätzliche Stützen 18 kontrolliert, die über weitere Gelenke 19 an der Anlage angreifen, die von dem Gelenk 17 beabstandet sind, so dass sich Hebelarme bzw. Abstand 20 ergeben, wodurch über die Stützen 18 eine Kontrolle der Orientierung möglich wird. Die Stützen wiederum sind über weitere Gelenke mit Verbindungseinrichtungen 4 verbunden, wobei diese Gelenke 21 bevorzugt in einem Abstand 22 seitlich von der Verbindungsachse der Angriffspunkte der entsprechenden Verbindungseinrichtung 4 an Trageinheit 3 und Referenzeinheit 5 angeordnet sind.

Das Gelenk 21 führt eine Bewegung in Richtung des Richtungspfeils 23 aus, wenn die Verbindungseinrichtungen 4 eine Bewegung in Richtung des Richtungspfeils 11 ausführen. Somit bewegen sich Gelenk 21 und Stange 18 entgegengesetzt zu der durch Richtungspfeil 12 markierten Bewegung der Trageinheit 3. Durch geeignete Wahl der Länge der Abstände bzw. Hebelarme 22 und 20 kann bewirkt werden, dass die Seitwärtsbewegung der Anlage nicht auftritt. Dies gelingt vollständig in jedem Fall dann, wenn die Bewegung der Verbindungseinrichtungen nur um kleine Winkel erfolgt, da die Bewegungen dann in guter Näherung, wie bereits oben ausgeführt, als linear angesehen werden können.

Es sind zwei Stützen 18 erforderlich, um die Orientierung vorzugeben. Diese können mit jeweils verschiedenen, aber auch mit der gleichen Verbindungseinrichtung 4 gekoppelt werden. Vorteilhaft ist es, wenn die Verbindungseinrichtungen 4 eine Steifheit besitzen, so dass eine starre Kopplung der Bewegung des Hebelarms 22 mit der Orientierung der Stütze gewährleistet ist bzw. eine Verdrehung des Hebelarms 22 um die Stütze vermieden wird.

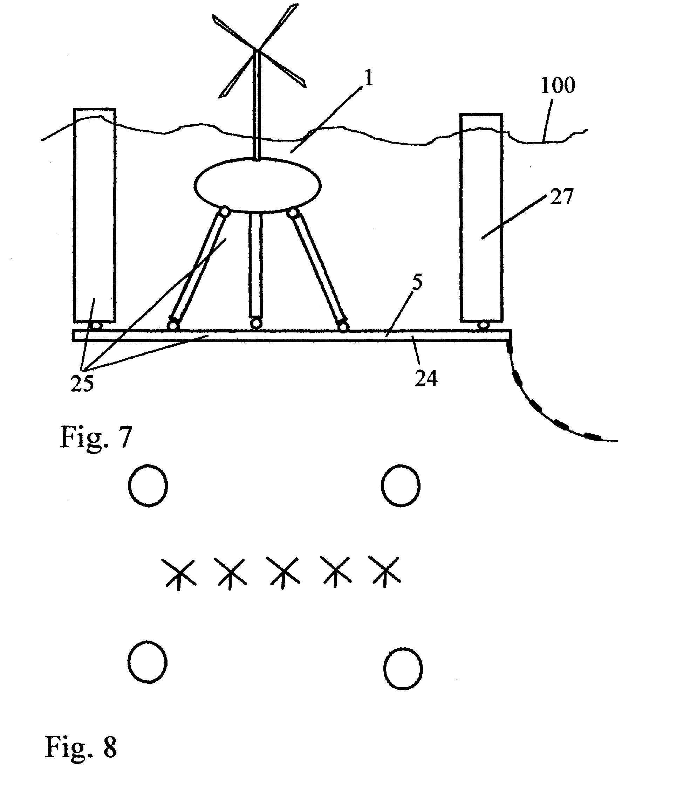

In Fig. 7 ist eine Variante der Vorrichtung 1 dargestellt, in der die Referenzeinheit 5 aus einer weiteren Struktur 24 besteht, die zusammen mit der Vorrichtung 1 einen Halbtaucher bildet.

Bei dieser Konstruktion trägt der Auftrieb der Vorrichtung 1 zum Auftrieb des Halbtauchers bei. Damit der permanente Auftriebsüberschuss weiter gewährleistet ist, müssen die Auftriebskörpervotumina 8 weiter vollständig getaucht bleiben. Die als Referenzeinheit 5 dienende Struktur 24 kann zu diesem Zweck Ballast aufweisen, der dem Auftriebsüberschuss entgegenwirkt. Um die Schwimmtiefe des gesamten Halbtauchers festzulegen, ist es zweckmäßig, zusätzliche Schwimmkörper 26 an der als Referenzeinheit 5 dienenden Struktur 24 anzubringen, die teilweise aus dem Wasser ragen und so eine Schwimmlage bestimmen. Die zusätzlichen Schwimmkörper 26 können beweglich an der Referenzeinheit angebracht werden, so dass auch sie nur verminderte Wellenkräfte auf die Referenzeinheit übertragen. Die Schwimmkörper 26 können auch als Gelenktürme ausgebildet werden, die weitere Funktionseinheiten aufnehmen (Wasserstoffproduktionsanlagen, Ammoniakgewinnung, Kontrolleinrichtungen, Festmacheinrichtungen für Schiffe und Übergabeeinrichtungen für flüssige oder gasförmige Medien etc.).

Eine starre Verbindung der Schwimmkörper 26 mit der Referenzeinheit ist auch möglich und kann zur konstruktiven Einfachheit beitragen.

In Fig. 8 ist eine zweckmäßige Anordnung für Windenergieanlagen auf einer solchen Halbtaucherstruktur dargestellt: Die Kreise markieren die Schwimmkörper 26, welche die Schwimmlage der Halbtaucherkonstruktion bestimmen. Die Windenergieanlagen sind durch die entsprechenden Seezeichen dargestellt. Die Schwimmkörper befinden sich vorzugsweise am Rand der Konstruktion, wo sie die größte Wirkung entfalten können. Die Windenergieanlagen sind in einer Reihe angeordnet. Diese sollte möglichst quer zur Hauptwindrichtung orientiert sein. Zur Verankerung der Halbtaucherkonstruktion können unterschiedliche Methoden verwendet werden. Mittels Ankerketten lässt sich bereits kostengünstig eine ausreichende Stabilität herstellen. Durch mehrere Ankerketten kann die Orientierung der Halbtaucherkonstruktion festgelegt werden. Auf Grund der Größe der Gesamtkonstruktion wird diese innerhalb des durch die Ketten erlaubten Spielraums nur langsame Bewegungen ausführen, welche den Betrieb der Windenergieanlagen nicht stören.

Alternativ kann aber für die Verankerung z.B. eine Tensionieg-Verankerung eingesetzt werden. Die Vorspannung der einzelnen Tensionlegs wäre dann erheblich kleiner als die Summe des Auftriebsüberschusses der einzelnen Einheiten. Bei großen Wassertiefen lässt sich dadurch z.B. Material sparen.

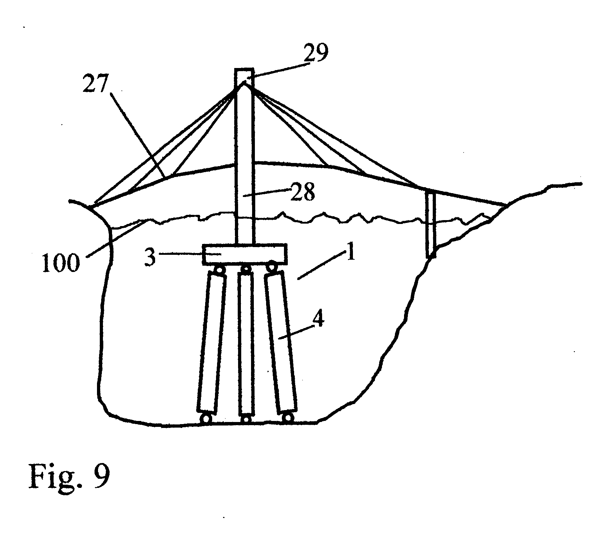

Die erfindungsgemäße Vorrichtung 1 kann, wie in Fig. 9 dargestellt, auch zur Lagerung von Brücken 27 verwendet werden. Dazu kann auf der Trageinheit 3 ein Pfeiler 28 aufgesetzt werden, der als Brückenpfeiler dient. Werden die Verbindungseinrichtungen, wie oben beschrieben, in geeigneter Weise schräg gestellt, kann eine Gegenbewegung die Seitwärtsbewegung der Vorrichtung im Wasser kompensieren (wie oben beschrieben). Je nach Wahl der Schrägstellung der Verbindungseinrichtungen 4 wird auf einer bestimmten Höhe des Pfeilers 28 die Bewegung vollständig kompensiert sein. Je nach Konstruktion des übrigen Brückenaufbaus kommt diesem Punkt 29 eine besondere Rolle zu. Er wird daher im Folgenden als ruhender Angriffspunkt 29 bezeichnet. Wird die Brücke z.B. als Hängebrücke oder insbesondere als Schrägseilbrücke ausgelegt, so ist es zweckmäßig, den Angriffspunkt der Seile in diesen ruhenden Angriffspunkt zu legen. Bis auf eine Stampfbewegung ist die Seitwärtsbewegung der Trageinheit 3 von der Bewegung der Brücke vollständig entkoppelt. Diese Stampfbewegung ist für kleine Winkel der Seitwärtsbewegung der Trageinheit vernachlässigbar klein. Die auf die Brücke wirkenden seitlichen Kräfte werden von der Vorrichtung auf den Meeresgrund übertragen, ohne eine Seitwärtsbewegung der Trageinheit verursachen zu können. Aus diesem Grund kann der Brückenpfeiler auch seitlich von der Brücke angeordnet werden. Für eine Brücke können so mehrere, gegenüber der Brücke seitlich versetzte Pfeiler angewendet werden, an denen die Brücke abgespannt wird. So kann eine gute Seitenstabilisierung der Brücke erreicht werden.

Die erfindungsgemäße Vorrichtung kann auch bei einer Brückenkonstruktion als direkte Stütze eingesetzt werden. Es ist dabei zweckmäßig, den ruhenden Angriffspunkt in die Nähe des Weges zu legen und die Masse der Brücke auf dieser Höhe zu konzentrieren. Alternativ kann an dem ruhenden Angriffspunkt auch ein Gelenk eingefügt werden. Die Neigungsstabilität der Brücke kann dabei durch das Zusammenwirken mehrerer Stützpfeiler hergestellt werden. Alternativ kann die Lagestabitität über die Auflagepunkte an Land erreicht werden.

Die dargestellten Brückenkonstruktionen sind besonders geeignet für tiefe Gewässer wie z.B. Fjorde, da hier die üblichen Gründungen besonders teuer werden. Auch lässt sich die Seegangsbeständigkeit leichter herstellen als bei festen Konstruktionen.

Insbesondere bei sehr tiefen Gewässern lässt sich die erfindungsgemäße Vorrichtung, wie oben beschrieben, auf einer Hatbtaucherbasis ausführen. Dabei kann die Halbtaucherbasis ihrerseits mit Tensionlegs abgespannt werden, die dann jedoch weniger durch Auftriebsüberschuss belastet sind, als dies bei der übrigen Konstruktion der Fall ist.

Für die erfindungsgemäße Verankerung der erfindungsgemäßen Vorrichtung können unterschiedliche Methoden verwendet werden, die für verschiedene Anforderungen jeweils spezifische Vorteile aufweisen:
Rammpfahlanker bilden eine zuverlässige Verbindung mit dem Meeresgrund. Die Pfahlanker können sowohl Zug- als auch Druckbelastung aufnehmen. Da die zu erwartende Zugbelastung wegen des Auftriebsüberschusses stets größer ist als die zu erwartende Druckbelastung, kommt bei den in dieser Schrift dargestellten Konstruktion solchen Ankern eine besondere Bedeutung zu, die vornehmlich durch Mantelreibung wirken (sogenannte Zuganker). Bei solchen Konstruktionen, bei denen eine asymmetrische Verteilung der Kräfte stattfindet, kann es jedoch auch vorkommen, dass ein Anker mehr Druck- als Zugbelastung aufnimmt. Hier sind besonders solche Pfähle sinnvoll, die eine große Querschnittsfläche aufweisen. Der Rammpfahlanker hat den Vorteil, dass beim Rammen ein Protokoll angefertigt werden kann, in dem der Vortrieb beim Rammen dokumentiert wird. Dieses Protokoll kann dann Aufschluss über die Festigkeit des Ankers geben. Alternativ können auch andere Pfahlanker wie etwa gegossene Anker verwendet werden. Solche Anker können eine noch größere Festigkeit besitzen als die Rammpfahlanker. Zur Aufnahme von Torsionskräften können besondere torsionsfeste Anker verwendet werden, die bereits Stand der Technik sind.

Durch Schwergewichtsanker kann die Konstruktion ebenfalls verankert werden. Diese zeichnen sich durch eine Unempfindlichkeit gegenüber der Bodenbeschaffenheit aus. Schwergewichtsanker können auch in Senkkastenbauweise ausgeführt und schwimmend an den Bestimmungsort gebracht werden. Anschließend können die für den Auftrieb benötigten Hohlräume mit Wasser, Sand, Beton oder anderem Ballast verfüllt werden.

Insbesondere für größere Wassertiefen eignen sich Sauganker. Da ihre Saugwirkung vom umgebenden Wasserdruck abhängt, werden sie mit zunehmender Wassertiefe immer effizienter. Es gibt jedoch auch die Möglichkeit, solche Anker in geringeren Wassertiefen einzusetzen, wenn die Saugglocke entsprechend groß ist. Eine besonders vorteilhafte Konstruktion ergibt sich dabei, wenn mehrere oder alle Verbindungseinrichtungen an einer Ankerglocke angreifen. Die Position der Verbindungseinrichtungen zueinander lässt sich so genau durch die Anordnung auf der Glocke bestimmen, und Kräfte, die von den Verbindungseinrichtungen in jeweils entgegengesetzten Richtungen ausgeübt werden, können sich so gegenseitig kompensieren. Zudem können die Verbindungseinrichtungen zusammen mit der Glocke zusammengebaut und dann verankert werden. Saugglocken entsprechender Größe sind bereits für Windkraftanlagen mit fest stehendem Mast entwickelt worden. Auf diese Technik kann zurückgegriffen werden. Die gemeinsame Saugglocke kann man auch als eine Referenzeinheit 5 im Sinne der vorangegangenen Ausführungen auffassen.

Auch für die Verankerung mit Pfählen kann es sinnvoll sein, ein als Referenzeinheit 5 dienendes Gestell zu verwenden, das die Verbindungseinrichtungen an der unteren Seite zueinander positioniert. Dieses Gestell kann dann mit den Methoden der Unterwasserrammung, wie sie auch bei Stahlgitterkonstruktionen oder in der Windenergietechnik den Tripods Anwendung findet, befestigt werden. Durch eine solche Referenzeinheit 5 können dann auch die durch die Verbindungseinrichtungen übertragenen Drehmomente abgeleitet werden. Alternativ ist auch die einzelne Verankerung der Verbindungseinrichtungen im Meeresgrund möglich. Zur Ableitung der Drehmomente können hier entweder einzelne Anker verwendet werden, die zur Ableitung von Drehmomenten geeignet sind, oder es kann für die entsprechende Verbindungseinrichtung ein Gestell verwendet werden, das mehrere Pfähle zusammenfasst.

Die Verbindungseinrichtungen können zweckmäßigerweise aus Stahlrohren aufgebaut sein. Stahlrohre sind torsionsfest. Die Zylinderform sorgt für ein günstiges Verhältnis zwischen Volumen und Oberfläche, so dass hier ein optimaler Auftriebsbeitrag geleistet wird. Insbesondere bei großen Konstruktionen kommt aber auch Ferrozement als Konstruktionsmaterial in Betracht. Auch dieses Material wurde bereits zum Bau von Gelenktürmen eingesetzt (z.B. der Versuchsturm CONAT).

Durch den Auftrieb der Verbindungseinrichtungen entsteht an diesen ein Biegemoment. Dies ist in der Mitte am größten und nimmt nach unten hin ab. Es ist daher zweckmäßig, eine entsprechende Festigkeftsverteilung zu wählen. Herabgesetzt werden kann das Biegemoment, indem das Auftriebskörpervolumen größtenteils oben an der Verbindungseinrichtung angeordnet wird. Eine zweckmäßige Konstruktion ist dabei die Anordnung eines größeren Durchmessers oben und eines kleineren unten.

Eine weitere Möglichkeit besteht darin, Ballast im unteren Teil der Verbindungseinrichtung 4 vorzusehen. Da, bedingt durch den kurzen Bewegungsradius, der untere Bereich der Verbindungseinrichtung nicht zur Neigungsstabilität beiträgt, ist ein solcher Ballast unschädlich. Insbesondere im Zusammenhang mit Brückenkonstruktionen wäre eine solche Konstruktion sinnvoll.

Die Verbindungseinrichtung könnte durch ein Stahlbeton oder Ferrozementrohr realisiert werden, das sich nach unten hin verjüngt und in eine massive Stütze übergeht. Beim Aufbau der Vorrichtung lässt sich eine solche Verbindungseinrichtung aufrecht stehend zum Einsatzort bewegen. Alternativ kann ein Rohr verwendet werden, das zunächst keinen Ballast aufweist und erst nachträglich mit Ballast gefüllt wird.

Die Schwenkbarkeit der Verbindungseinrichtungen kann durch unterschiedliche Maßnahmen hergestellt werden: Wie bei Gelenktürmen können auch Kugel- und Kardangelenke Verwendung finden. Im Zusammenhang existiert ein umfangreicher Stand der Technik, der in den entsprechenden Patentklassen, aber auch in der oben zitierten Fachliteratur nachgelesen werden kann. Kardangelenke sind grundsätzlich zur Übertragung von Torsionsmomenten geeignet. Von Kugelgelenken gibt es ebenfalls Varianten, die Torsionsmomente übertragen. Dazu sind Führungsstifte und Führungsschlitze an Kugel- und Gelenkpfanne angebracht.

Auch Gelenke, die nicht in der Lage sind, Zugbelastung aufzunehmen, können bei der erfindungsgemäßen Konstruktion Einsatz finden: Dazu kann am unteren Ende der Verbindungseinrichtung Ballast angebracht werden, der den Auftriebsüberschuss kompensiert. So kann erreicht werden, dass die Gelenke zwischen Referenzeinheit 5 und den Verbindungseinrichtungen nur auf Druck belastet werden. Wird der Auftriebsüberschuss nur durch die Auftriebskörpervolumina an den Verbindungseinrichtungen erzeugt, und besitzt die Trageinheit 3 keinen Auftriebsüberschuss, so werden auch die Gelenke zwischen Trageinheit 3 und Verbindungseinrichtungen 4 nur auf Druck belastet. Bei der Auslegung muss die Wellenbelastung berücksichtigt werden.

Alternativ kann man auch Gelenke verwenden, die zugfest sind. Kardangelenke sind dies üblicherweise. Bei Kugelgelenken ist dies dann der Fall, wenn die Kugel mit mehr als einer Halbschale umschlossen wird. Will man ein zerlegbares, zugfestes Kugelgelenk erhalten, so kann man einen verschiebbaren Bolzen verwenden, um die Kugelschale zu schließen, so wie das bei einer Kugelkupplung der Fall ist.

Alternativ zur Verwendung von Gelenken kann die Schwenkbarkeit hergestellt werden, indem man die Konstruktion an bestimmten Stellen elastisch ausführt. Dazu kann man die Vorrichtung 1 im Übergangsbereich zwischen Trageinheit 3 und Verbindungseinrichtungen 4 mit in geeigneter Weise elastischen Rohrprofilen aufbauen. Ebenso kann der untere Bereich der Verbindungseinrichtungen entsprechend ausgestaltet werden.

Die Verbindungseinrichtungen 4, die nur Zugbelastung aufnehmen müssen, können durch Seile (aus Stahldraht oder Kunststofffasern) oder Ketten hergestellt werden. Durch diese kann eine ausreichende Schwenkbarkeit erreicht werden. Aber auch diese Verbindungseinrichtungen 4 können steifer, z.B, als Stahlrohre oder insbesondere vorgestreckte Paralleldrahtbündel, ausgeführt werden, so dass der Einsatz von Gelenken auch hier zweckmäßig sein kann. Für die Herstellung gerade auch für den Offshore-Bereich geeigneter Verbindungseinrichtungen gibt es einen umfangreichen Stand der Technik, auf den zurückgegriffen werden kann.

Je nach Ausführung der Vorrichtung kann die erfindungsgemäße Vorrichtung als Ganzes oder in Einzelteilen an den Aufstellungsort gebracht werden. Zur Montage aus Einzelteilen kann wie folgt vorgegangen werden: Zunächst wird die Referenzeinheit am Bestimmungsort vorbereitet. Anschließend werden die Verbindungseinrichtungen befestigt. Sofern die Verbindungseinrichtungen Hohlräume aufweisen, können diese durch teilweises Fluten zum Sinken gebracht werden. Sie können dann beispielsweise an einem Schwimmkran abgesenkt werden. Da sich die Verbindungseinrichtungen vollständig unter Wasser befinden, können sie aber auch von einem Schiff aus mit einer Winde abgelassen werden. Die Referenzeinheit und die Verbindungseinrichtungen werden vorzugsweise im Gelenk zusammengefügt. Um die genaue Positionierung des unteren Endes zu erreichen, kann z.B. ein Unterwasserroboter eingesetzt werden. Es kann aber auch mittels weiterer Seile von Hilfsschiffen aus positioniert werden. Die Trageinheit 3 wird anschließend auf die Verbindungseinrichtungen 4 aufgesetzt. Sie kann - fertig montiert - auch mit der dafür bestimmten Anlage zum Einsatzort transportiert werden. Dazu ist ein Stützponton zweckmäßig, da die Trageinheit keine Schwimmstabilität besitzt. Der Auftrieb der Trageinheit kann beim Transport jedoch ausgenutzt werden. Zum Verbinden von Trageinheit und Auftriebskörper kann es sinnvoll sein, einen Auftriebsüberschuss der Trageinheit 3 durch Ballast oder durch Fluten herabzusetzen, um ein gezieltes Absenken zu ermöglichen. Das Absenken kann z.B. von dem Stützponton aus über Winden erfolgen. Es ist zweckmäßig, erst nach der Montage das Ballastwasser aus deren Verbindungseinrichtungen zu entfernen, da sie sich durch den Auftriebsüberschuss schwerer dirigieren lassen. Werden als Verbindungseinrichtungen auch Seile verwendet, so können diese durch Taucher angebracht werden. Es ist zweckmäßig, die Seite durch Auftriebsmittel so auszustatten, dass ihr Eigengewicht durch den Auftrieb in etwa kompensiert wird oder sie einen leichten Auftriebsüberschuss haben. So lassen sie sich bei der Montage leichter handhaben. Zudem wird ein Durchhängen verhindert (im Stand der Technik finden sich dazu umfangreiche Möglichkeiten).

Ist die Vorrichtung 1 Bestandteil einer Halbtaucherkonstruktion, so kann sie z.B. wie oben beschrieben auf diese aufgesetzt werden.
Die dargestellte Erfindung ist nicht auf die Ausführungsbeispiele beschränkt. Dem Fachmann bieten sich durch die Erfindung viele neue Möglichkeiten, gerade auch im Zusammenhang mit dem bewährten Stand der Technik, der z.B. in der hier zitierten Literatur wiedergegeben wird.

Es bleibt noch, Folgendes festzuhalten: Da die erfindungsgemäße Vorrichtung 1 weder Formnoch Gewichtsstabilität aufweisen muss, kann es ein kennzeichnendes Merkmal der Konstruktion sein, dass der Auftriebsschwerpunkt weit unter dem Gewichtsschwerpunkt liegt.

Auf Ballast kann so verzichtet werden. Auch ist eine ausladende Schwimmkörperanordnung entbehrlich, so dass sich als kennzeichnendes Merkmal eine kurze Wasserlinie ergibt.

### Bezugszeichenliste

- 1.: Erfindungsgemäße Vorrichtung
- 2.: Anlage
- 3.: Trageinheit
- 4.: Verbindungseinrichtung
- 5.: Referenzeinheit
- 6.: Meeresgrund
- 7.: Gelenke
- 8.: Auftriebskörpervolumen
- 9.: Mittelachse der Vorrichtung 1
- 10.: Richtungspfeil (Bewegung des Tragkörpers 3)
- 11.: Richtungspfeil (Bewegung der Anlage)
- 12.: Mast der Windenergieanlage
- 13.: Verbindungseinrichtung 4, die als Auftriebskörper ausgebildet ist
- 14.: Verbindungseinrichtung 4, die eine von Verbindungseinrichtung 13 verschiedene Bauform aufweist
- 15.: Verbindungseinrichtung, die nur Zugbelastung aufnehmen muss
- 16.: Zylindrische Auftriebskörper
- 17.: Gelenk zwischen Tragkörper 3 und Anlage 2
- 18.: Stütze
- 19.: Gelenk zwischen Stütze 18 und Anlage 2
- 20.: Hebelarm bzw. Abstand zwischen Gelenk 19 und Gelenk 17
- 21.: Gelenk zwischen Stütze und Verbindungseinrichtung 4
- 22.: Hebelarm bzw. seitlicher Abstand von der Verbindungsachse der Angriffspunkte der Verbindungseinrichtung 4 an Trageinheit 3 und Referenzeinheit 5
- 23.: Richtungspfeil (Bewegung)
- 24.: Struktur, die als Referenzeinheit 5 dient
- 25.: Halbtaucher
- 26.: Schwimmkörper zum Bestimmen einer Schwimmlage des Halbtauchers 25
- 27.: Brückenkonstruktion unter Verwendung der erfindungsgemäßen Vorrichtung
- 28.: Brückenpfeiler
- 29.: Ruhender Angriffspunkt

- 100.: Wasseroberfläche

## Patentansprüche

1. Vorrichtung zur stabilen Lagerung von Anlagen 2 und/oder Bauwerken auf See, bestehend aus mindestens einer Trageinheit 3 zum Tragen, mindestens einer über dem Wasser befindlichen, hoch aufragenden Anlage 2 oder eines hoch aufragenden Bauwerks, einer weiter unten befindlichen Referenzeinheit 5 wie etwa dem Meeresgrund 6 oder einem anderen, hinreichend stabilen Gebilde sowie Verbindungseinrichtungen 4, die zum Beschränken der Bewegungsmöglichkeiten der Trageinheit 3 gegenüber der Referenzeinheit 5 Trageinheit 3 und Referenzeinheit 5 miteinander verbinden, wobei die Verbindungseinrichtungen 4 an Trageinheit 3 und Referenzeinheit 5 vorzugsweise in alle Richtungen schwenkbar angebracht sind und an Verbindungseinrichtungen 4 und/oder Trageinheiten angreifendes Auftriebskörpervolumen 8 vorgesehen ist, welches mehr Auftrieb erzeugt, als zum Tragen der Anlage 2 oder des Bauwerks erforderlich ist, so dass die Vorrichtung 1 eine durch die Orientierung der Verbindungseinrichtungen 4 vorgegebene aufrechte Position als Ruhelage einnimmt und die wesentlichen Teile dieses Auftriebskörpervolumens 8 in durch die Verbindungseinrichtungen 4 zugelassenen möglichen Stellungen der Vorrichtung 1 bei den zu erwartenden Wasserständen stets unter Wasser sind, wobei der Auftriebsschwerpunkt der Vorrichtung 1 weit unter dem Gewichtsschwerpunkt liegt, **dadurch gekennzeichnet, dass** mindestens ein sich zwischen den Verbindungseinrichtungen 4 ergebender Hebelarm kürzer ist, als dies zur Aufrechterhaltung einer Vorspannung der Verbindungseinrichtungen 4 unter den zu erwartenden Belastungen erforderlich wäre, so dass mindestens eine Verbindungseinrichtung 4 vorgesehen ist, Druck- und Zugbelastungen aufzunehmen, und/oder es sich bei der Referenzeinheit 5 nicht um den Meeresgrund, sondern um eine künstliche Einheit handelt, die zusammen mit der Vorrichtung 1 eine schwimmfähige, vorzugsweise als Halbtaucher ausgebildete Einheit bildet.

2. Vorrichtung nach dem vorangegangenen Anspruch, **dadurch gekennzeichnet, dass** mindestens eine Verbindungseinrichtung 4 aus mindestens einem Zugelement besteht, das vorzugsweise durch den Auftriebsüberschuss vorgespannt wird.

3. Vorrichtung nach Anspruch 1, **dadurch gekennzeichnet, dass** mindestens drei Verbindungseinrichtungen 4 sowohl Zug- als auch Druckkräfte aufnehmen können.

4. Vorrichtung nach einem der vorangegangenen Ansprüche, **dadurch gekennzeichnet, dass** mindestens eine Verbindungseinrichtung 4 als torsionssteife Verbindung zwischen Trageinheit 3 und Referenzeinheit 5 ausgelegt ist, und diese Verbindungseinrichtung in der Ruhelage eine vorzugsweise senkrecht orientiert ist, so das das giren beschrenkt werden kann.

5. Vorrichtung nach einem der vorangegangenen Ansprüche, **dadurch gekennzeichnet, dass** die Verbindungseinrichtungen 4 in der Ruhelage parallel bzw. nahezu parallel zur Senkrechten verlaufen, so dass die Bewegung vorwiegend in Richtung der Horizontalen möglich ist.

6. Vorrichtung nach einem der vorangegangenen Ansprüche, **dadurch gekennzeichnet, dass** das Auftriebskörpervolumen 8 so bemessen ist, dass es zwischen 25% und 45% mehr Auftrieb erzeugt, als zur Kompensation der Gewichtskraft erforderlich ist.

7. Vorrichtung nach einem der vorangegangenen Ansprüche, **dadurch gekennzeichnet, dass** auf der Vorrichtung 1 als Anlage 2 mindestens eine Windenergieanlage befestigt ist.

8. Vorrichtung nach einem der vorangegangenen Ansprüche, **dadurch gekennzeichnet, dass** die Referenzeinheit 5, an der die Verbindungseinrichtungen 3 angreifen, eine weitere künstliche Struktur ist, so dass die von den Verbindungseinrichtungen übertragenen Kräfte sich gegenseitig kompensieren können, bevor sie auf die Anker übertragen werden.

9. Vorrichtung nach dem vorangegangenen Anspruch, **dadurch gekennzeichnet, dass** die Vorrichtung 1 mindestens einen Brückenpfeiler 26 vorzugsweise für eine Hängebrücke oder eine Schrägseilbrücke trägt.
Vorrichtung nach einem der vorangegangenen Ansprüche, **dadurch gekennzeichnet, dass** Teile der Auftriebskörpervolumina an der Trageinheit, vorzugsweise in der Nähe der Angriffspunkte der Verbindungseinrichtungen 4, angeordnet sind und diese Teile der Auftriebskörpervolumina vorzugsweise mindestens dem Auftriebsüberschuss der Konstruktion entsprechen.
Vorrichtung nach einem der vorangegangenen Ansprüche, **dadurch gekennzeichnet, dass** die Verbindungseinrichtungen 4 zumindest teilweise durch Stahlrohre oder Rohre aus Ferrozement gebildet werden, und dass sich die zwischen den Verbindungseinrichtungen 4
und der Trageinheit 3 sowie den Verbindungseinrichtungen 4 und der Referenzeinheit 5 vorzugsweise zumindest teilweise Gelenke, die vorzugsweise als Kugel- oder Kardangelenke oder elastische abschnitte ausgebildet sind, befinden.
dass die Verbindung zwischen Meeresgrund 6 und Referenzeinheit 5 oder Meeresgrund 6 und Verbindungseinrichtungen 4 durch Rammpfahlanker, Gewichtsanker, die vorzugsweise in Senkkastenbauweise ausgeführt sind, Sauganker oder andere Pfahlanker oder aus einer Kombination verschiedener Ankertypen hergestellt wird.
